Europäisches Patentamt

European Patent Office

Office européen des brevets

(19)

(11) EP 0 778 544 B1

(12) **FASCICULE DE BREVET EUROPEEN**

(45) Date de publication et mention
de la délivrance du brevet:
**23.08.2000 Bulletin 2000/34**

(51) Int Cl.⁷: **G06T 7/20**

(21) Numéro de dépôt: **96402631.4**

(22) Date de dépôt: **05.12.1996**

(54) **Procédé de traitement de données dans des réseaux matriciels dans un système d'estimation de mouvement**

Verfahren zur Datenverarbeitung in matrixförmigen Netzwerken in einem
Bewegungsschätzungssystem

Data processing method in arrays in a motion estimation system

(84) Etats contractants désignés:
**DE FR GB IT**

(30) Priorité: **06.12.1995 FR 9514432**

(43) Date de publication de la demande:
**11.06.1997 Bulletin 1997/24**

(73) Titulaire: **THOMSON multimedia**
**92648 Boulogne Cédex (FR)**

(72) Inventeurs:
• **Pirson, Alain**
**92050 Paris la Defense Cedex (FR)**
• **Daoudi, Mohamed**
**92050 Paris la Defense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
• **MICROPROCESSORS AND MICROSYSTEMS, vol. 17, no. 7, Septembre 1993, LONDON GB, pages 425-434, XP000397915 AMANDA RICHARDSON ET AL.: "Sti 3220 motion estimation processor"**
• **PROCEEDINGS OF THE 1995 INTERNATIONAL CONFERENCE ON ACOUSTICS, SPEECH, AND SIGNAL PROCESSING; MAY 9-12 ,1995, DETROIT (US);IEEE ,NEW YORK(US), pages 3283-3286, XP000534759 ALAIN PIRSON ET AL.: "A programmable motion estimation processor for full search block matching"**
• **1989 IEEE INTERNATIONAL SYMPOSIUM ON CIRCUITS AND SYSTEMS, PORTLAND (US), MAY 8-11, 1989 ; IEEE PRESS ,NEW YORK (US), pages 179-182, XP000131592 MING-TING SUN ET AL.: "A flexible architecture for full-search block-matching motion vector estimation"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé de traitement de données dans des réseaux matriciels dans un système d'estimation de mouvement. Le procédé conforme à l'invention est utilisé notamment dans des encodeurs d'images de télévision utilisant un procédé de compensation de mouvement.

Un certain nombre de systèmes de compression d'images sont basés sur un traitement par blocs de pixels. Dans le cas de MPEG2 (pour "Motion Picture Expert Group"), les images sont divisées en blocs de 8*8 pixels, quatre blocs étant rassemblés en un macrobloc de 16*16 pixels. Les blocs ou les macroblocs subissent divers traitements pour la réduction de la redondance entre images et à l'intérieur d'une même image. Un des traitements utilisés est l'estimation de mouvement. Ce procédé consiste à estimer le déplacement d'une partie de l'image courante par rapport à des images précédentes ou futures. On détermine ainsi un ou plusieurs vecteurs mouvement qui définissent le déplacement. Ces vecteurs mouvement permettent d'obtenir, à partir des images précédentes ou futures, une prédiction de l'image courante. On détermine alors la différence entre cette prédicition et l'image courante, et c'est cette différence qui est utilisée pour la suite de la compression. Actuellement, des vecteurs mouvement sont utilisés pour des images dites "inter" et "bi-directionnelles", mais peuvent l'être également pour des images dites "intra", dans le but de réduire les effets d'éventuelles erreurs de transmission.

L'estimation de mouvement est généralement effectuée pour chaque macrobloc. En lieu et place d'une image précédente, on peut également utiliser une image de référence stockée dans l'encodeur, cette image correspondant à l'image décodée par un décodeur (c'est à dire une image tenant compte des pertes d'information dues à la compression).

Une technique pour déterminer le "meilleur" macrobloc dans l'image de référence consiste à comparer le macrobloc courant à chaque macrobloc de l'image de référence. En tant que critère de comparaison, on définit une fonction d'erreur Err, calculée pour chaque position possible du macrobloc dans l'image de référence. La position donnant la plus faible valeur pour la fonction Err déterminera le vecteur déplacement. Ce dernier peut avoir diverses précisions, suivant la capacité de calcul disponible et la bande passante réservée au codage des vecteurs mouvement. Une précision d'une fraction de pixel peut être implémentée par interpolation inter-pixel. Si les vecteurs mouvement sont limités en amplitude, une fenêtre de recherche de taille appropriée est placée autour de la position définie par le macrobloc courant.

Le calcul des vecteurs mouvement exige de grandes capacités de calcul, qui augmentent avec la précision désirée, la résolution de l'image, leur fréquence etc...

Une fonction d'erreur classiquement utilisée est:

$$Err(m,n) = \sum_i \sum_j D(a(i,j), b(i+m, j+n))$$

où i et j désignent des positions à l'intérieur d'un macrobloc, où m et n désignent les coordonnées d'un vecteur mouvement et où a et b désignant respectivement des valeurs de luminance de pixels du macrobloc courant et du macrobloc déplacé de la fenêtre ou image de recherche.

La fonction D peut être par exemple D(x,y) = |x-y|.

Un processeur d'estimation de mouvement et un co-processeur à base de réseaux systoliques ont été décrits dans la demande de brevet française 94 10158 déposée au nom de Thomson Consumer Electronics le 19 août 1994.

Les réseaux systoliques sont les circuits qui effectuent l'évaluation de la distortion entre un bloc de pixels courant et un bloc de même taille d'une fenêtre de recherche d'une image passée ou future. Les réseaux systoliques possèdent des éléments de mémorisation pour mémoriser les blocs courants, ces blocs courants étant comparés à des blocs de même taille issus d'une fenêtre de référence. Les blocs de la fenêtre de référence sont introduits sous la forme de bandes de pixels dans les réseaux systoliques et s'y propagent colonne par colonne.

Les divers réseaux systoliques du co-processeur peuvent être utilisés selon différents modes de fonctionnement. Notamment, des réseaux systoliques en série peuvent être configurés pour traiter des blocs courants différents.

L'invention a pour but d'optimiser l'alimentation des réseaux systoliques en données.

L'invention a pour objet un procédé de traitement des données dans des réseaux matriciels dans un système d'estimation de mouvement, caractérisé en ce que chaque réseau effectuant un calcul de distortion pour un bloc de pixels d'une image courante, au moins deux réseaux étant disposés en série effectuant les calculs pour au moins deux blocs adjacents de ladite image courante, la fenêtre de référence correspondant à l'ensemble de ces blocs étant introduite par bandes de pixels dans le premier desdits réseaux et se propageant de réseau en réseau dans ladite série de réseaux, l'attribution des blocs aux réseaux et le sens d'introduction de la bande dans les réseaux étant tels que la dernière partie de la bande introduite dans le réseau corresponde à une partie de la fenêtre du bloc attribué au premier des réseaux.

Selon un mode de réalisation particulier, les fenêtres de référence sont centrées autour des positions des blocs courants, les fenêtres de deux blocs adjacents étant ainsi décalées d'un bloc.

Selon un mode de réalisation particulier, les diverses fenêtres ayant des dimensions identiques, l'attribution des blocs aux réseaux et le sens d'introduction de la bande dans les réseaux sont tels que les premiers résultats des calculs de distortion effectués par les différents réseaux soient disponibles en même temps.

Selon un mode de réalisation particulier, un premier bloc et un second bloc adjacents horizontalement sont traités respectivement par un premier réseau et un second réseau disposés en série dans cet ordre, l'introduction de la bande de pixels commençant par le premier réseau dans un sens tel que la partie de la bande correspondant à la fenêtre associée au second bloc soit introduite en premier.

Selon un mode de réalisation particulier, lorsque la fin d'une bande de pixels correspond à des parties de fenêtres de référence ne devant normalement pas être pris en compte par un réseau particulier traitant un bloc donné, on tient néanmoins compte des résultats de calcul obtenus à partir des données correspondant auxdites parties de fenêtres pour élargir la fenêtre de référence normalement associée au bloc traité par ledit réseau particulier.

D'autres caractéristiques et avantages de l'invention apparaîtront à travers la description d'un exemple de réalisation particulier non limitatif illustré par les figures jointes, parmi lesquelles:

- la figure 1 représente un diagramme fonctionnel d'un processeur d'estimation de mouvement,
- les figures 2a et 2b représentent schématiquement la stratégie de comparaison employée suivant le présent exemple de réalisation,
- la figure 3 représente un diagramme fonctionnel d'un réseau systolique utilisé pour le calcul des vecteurs mouvement,,
- la figure 4 représente un diagramme fonctionnel d'une cellule dite "S" du réseau systolique de la figure 3,
- la figure 5 représente un diagramme fonctionnel d'un réseau systolique simplifié permettant l'illustration du fonctionnement en mode non-entrelacé,
- la figure 6 représente un diagramme fonctionnel d'un réseau systolique simplifié permettant l'illustration du fonctionnement en mode entrelacé,
- la figure 7 représente un diagramme fonctionnel du coprocesseur suivant une première variante,
- la figure 8 représente un diagramme fonctionnel du coprocesseur suivant une seconde variante,
- la figure 9 représente la disposition de deux fenêtres de références correspondant à deux blocs courants adjacents,
- la figure 10 représente l'alimentation en données de deux réseaux systoliques en série suivant un premier exemple,,
- la figure 11 représente l'alimentation en données de deux réseaux systoliques en série suivant un premier exemple de réalisation de l'invention,
- la figure 12 représente l'alimentation en données de deux réseaux systoliques en série suivant un second exemple de réalisation de l'invention,

Dans un premier temps, on décrira un exemple de processeur d'estimation de mouvement mettant en oeuvre l'invention. On insistera plus particulièrement sur la description du co-processeur qui est l'élément qui effectue le calcul de l'erreur associée à chaque vecteur mouvement.

Pour plus d'informations sur l'utilisation de vecteurs mouvement dans la compression d'images aux normes MPEG, on se reportera à:
"Information technology, Generic coding of moving pictures and associated audio, Recommendation H.262 ISO/IEC 13818-2 (Video) Committee Draft of November 1993."

Le processeur d'estimation de mouvement permet de calculer différents types de vecteurs mouvement, suivant les exigences du standard MPEG: vecteurs pour trames ou images, vecteurs d'une image précédente vers l'image courante ou d'une image future vers l'image courante (respectivement "forward vectors" et "backward vectors" en terminologie anglo-saxonne).... Par la suite, pour la clarté des explications, exemple sera pris sur des vecteurs d'une image précédente vers l'image courante. Bien entendu, l'invention n'est pas limitée à l'exemple de réalisation présenté.

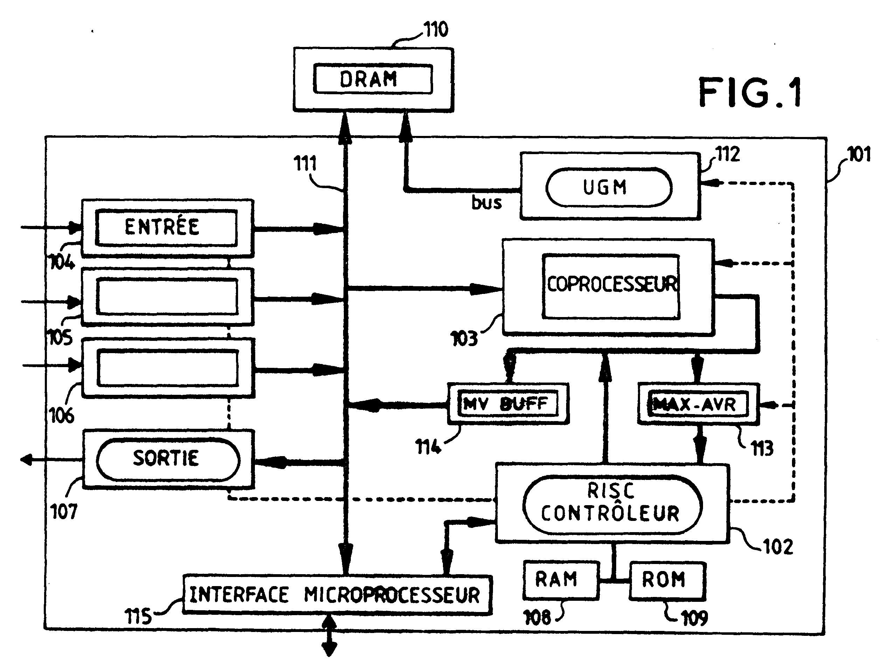

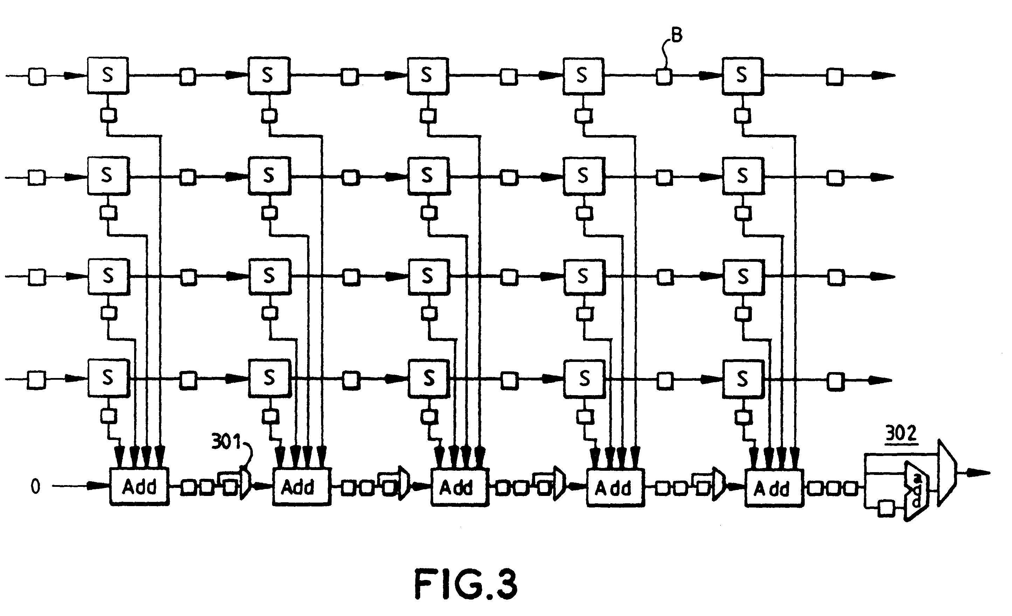

La figure 1 illustre de manière fonctionnelle un processeur d'estimation de mouvement 101. Le processeur 101 comprend un contrôleur RISC 102 (RISC signifiant:" Reduced Instruction Set Computer"), un coprocesseur à réseaux systoliques 103, trois ports d'entrée indépendants 104, 105, 106 pour charger les images, un port de sortie 107 pour fournir les vecteurs mouvement, ainsi qu'une RAM et une ROM locales (référencées respectivement par 108 et 109).

La présence de plusieurs port d'entrée indépendants permet de travailler sur autant de source vidéo indépendantes. Selon une variante de réalisation, chaque port d'entrée est muni d'un circuit de sous-échantillonnage pour la mise en oeuvre d'une estimation de mouvement hiérarchisée.

Les différents sous-ensembles mentionnés communiquent à travers un bus de données 111 qui est entre autres connecté à une mémoire externe DRAM 110. Une unité de gestion de mémoire 112 règle la circulation des données entre les mémoires locales. Les données correspondant aux images (de référence ou courantes) sont acheminées vers la mémoire dynamique 110. Elles sont ensuite relues pour être soumises en temps utile au coprocesseur 103. Les vecteurs mouvement calculés par le coprocesseur 103 sont renvoyés vers la mémoire dynamique 110 à travers une mémoire tampon MV BUFF 114. Au moment opportun, ces vecteurs sont relus et transmis par l'intermédiaire du port de sortie 107.

Le processeur 101 est également muni d'une interface microprocesseur 115 destiné à la programmation et la configuration du contrôleur RISC 102, par téléchargement de code et de paramètres de calcul. Les vecteurs mouvement stockés dans la mémoire dynamique 110 sont également accessibles à travers l'interface 115.

Une unité MAX-AVR 113 calcule le vecteur mouvement moyen et le vecteur mouvement maximal pour chaque image.

Le contrôleur RISC 102 est, selon le présent exemple, un processeur à 19 bits comportant 62 registres et une mémoire de données de 64 mots. Le contrôleur 102 a pour rôle de gérer les requêtes des différentes unités du processeur 101 et de les activer en temps utile.

Le contrôleur RISC 102 est connecté à la RAM locale 108 et à la ROM locale 109, cette dernière contenant des routines couramment utilisées.

Le co-processeur 103 comporte plusieurs réseaux systoliques travaillant en parallèle ou en série, suivant la configuration programmée. Par la suite, nous décrirons tout d'abord le fonctionnement d'un réseau systolique unique. Ceci permettra de mieux comprendre le fonctionnement du coprocesseur 103 qui, selon le présent exemple, associe 8 de ces réseaux.

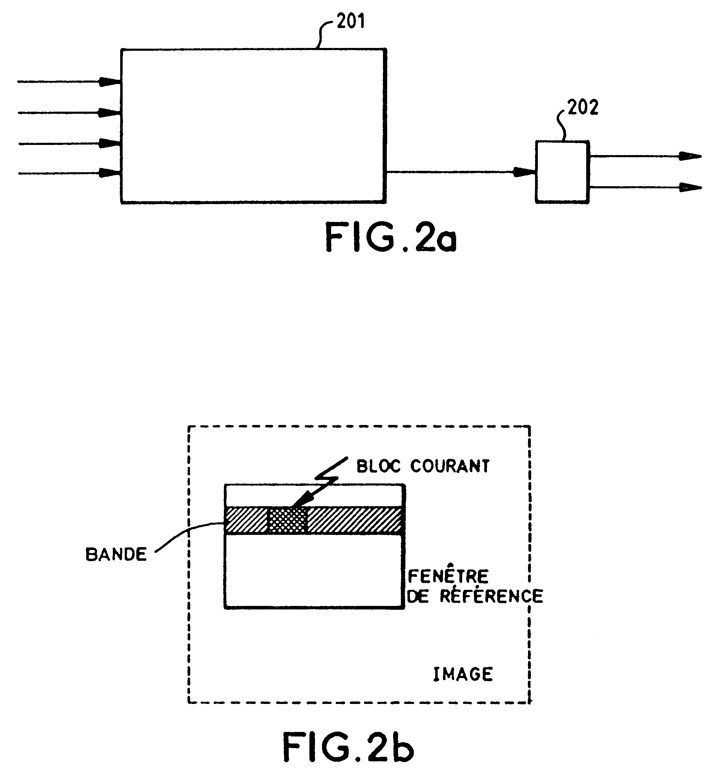

La figure 2a illustre le cas le plus simple de la circulation de l'information dans le réseau systolique. La fonction de base du réseau est de comparer un bloc de pixels courant au contenu d'une fenêtre de référence. Le bloc courant est stocké dans le réseau systolique 201. La fenêtre de référence est acheminée par bandes vers le réseau. Pour chaque position possible, la fonction d'erreur Err est calculée.

A partir des différentes valeurs de la fonction d'erreur pour un même bloc courant, mais des blocs différents extraits de la fenêtre de recherche, un élément 202 détermine le vecteur le plus approprié. Cet élément sera décrit plus en détail ultérieurement.

La figure 2b illustre la méthode de détermination des bandes à fournir au réseau systolique. Chaque bande a un nombre de lignes de pixels qui correspond au nombre de lignes du réseau (4 suivant le présent exemple). La première bande contient les quatre premières lignes de la fenêtre de référence. Lorsque la première bande a été totalement traitée, le traitement est poursuivi avec la bande suivante, qui contient les trois dernières lignes de la première bande, ainsi que la ligne immédiatement consécutive à cette première bande. Chaque bande est donc décalée d'une ligne par rapport à la bande précédente.

Chaque bande est fournie au réseau systolique colonne par colonne. Le bloc courant, ayant le même nombre de lignes que chaque bande, est ainsi comparé à tous les blocs de même taille de chaque bande. Finalement, le bloc courant aura été comparé à tous les blocs de même taille de la fenêtre de référence. Autant de valeurs de la fonction d'erreur auront été calculés et transmis à l'élément 202.

On notera que deux bandes diffèrent seulement d'une ligne de pixels. Cette redondance sera mise à profit plus loin pour limiter le chargement des données à partir de la mémoire 10.

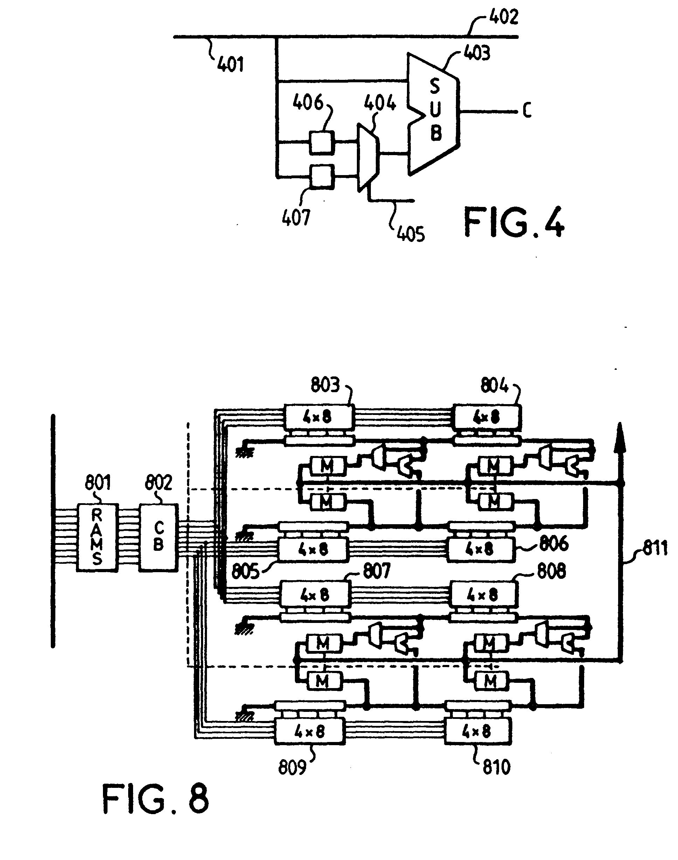

La figure 3 illustre un réseau systolique de quatre lignes et de cinq colonnes. Ce réseau comprend des cellules dites "S", des buffers "B", des additionneurs "Add", des cellules de dérivation 301 et une cellule de dérivation finale 302.

Les cellules S exécutent le calcul |a-b|, où a et b sont respectivement les valeurs d'un pixel du bloc courant et d'un pixel de la fenêtre de référence. La sortie de chaque cellule S d'une même ligne est reliée par un buffer B à l'entrée de la cellule S suivante. Un buffer B est également présent devant chaque première cellule S d'une ligne. Les valeurs de pixels b se propagent d'un buffer à un buffer suivant sur une même ligne à chaque cycle. Les buffers maintiennent les valeurs b pendant que les cellules S effectuent leurs calculs.

Chaque cellule S possède aussi une sortie C, qui fournit le résultat de l'opération |a-b|. Les sorties C sont également connectées à des buffers B. Tous les buffers B d'une même colonne sont reliés à un même additionneur Add. Il y a donc autant d'additionneurs que de colonnes.

La sortie d'un additionneur est reliée à l'entrée de l'additionneur suivant par trois buffers B en série. Suivant le mode de fonctionnement choisi, le dernier de ces trois buffers est ou non court-circuité par une cellule de dérivation 301.

La cellule de dérivation finale fournit soit une valeur de la fonction d'erreur à chaque cycle en fonctionnement normal non-entrelacé, soit une valeur de la fonction d'erreur tous les deux cycles en mode entrelacé. Dans ce dernier cas, l'additionneur intégré dans cette cellule de dérivation finale 302 additionne deux valeurs consécutives de la fonction d'erreur.

Selon une variante de réalisation, les additionneurs Add sont réalisés à l'aide d'additionneurs à trois entrées à sauvegarde de retenue ("Three input carry save adders")

La figure 4 représente plus en détail les fonctions d'une cellule S. La cellule S comprend une entrée 401, une sortie 402 reliée directement à l'entrée 401, une unité de calcul 403 possédant deux entrées dont l'une est reliée à l'entrée 401 et l'autre à la sortie d'un multiplexeur 404 permettant de sélectionner par l'intermédiaire d'une ligne de sélection 405 soit le contenu d'un buffer 406, soit le contenu d'un buffer 407. Les entrées des buffers 406 et 407 sont également reliées à l'entrée 401 de la cellule.

Chacun des deux buffers contient une valeur de pixel d'un bloc courant. Ces valeurs sont chargées à travers l'entrée 401 au moment opportun. Les circuits de commande des buffers sont classiques et ne seront pas illustrés plus en détail. La présence en parallèle de deux buffers permet entre autres de stocker en même temps deux blocs courants dans un seul réseau systolique. Ainsi, deux comparaisons pourront être effectuées pour une même position dans la fenêtre de référence. On réduit ainsi la quantité de données transitant entre la mémoire dynamique 10 et le coprocesseur 3.

La présence de deux buffers dans chaque cellule S permet d'autre part un fonctionnement dit entrelacé qui permet de doubler le nombre de lignes du bloc courant par rapport au nombre de lignes du réseau systolique. Ce fonctionnement sera abordé plus loin.

L'unité de calcul fournit la valeur absolue de la différence des deux valeurs présentes à ses entrées.

On notera que dans le cadre de cet exemple, les valeurs b des pixels de la fenêtre de référence sont stockées dans les buffers B entre les cellules S, tandis que les valeurs a des pixels du ou des blocs courants sont stockées dans les buffers des cellules S.

On notera également que les fonctions d'accumulation des résultats intermédiaires produits par les cellules S est réalisé entièrement par les additionneurs en bas de chaque colonne de cellules S.

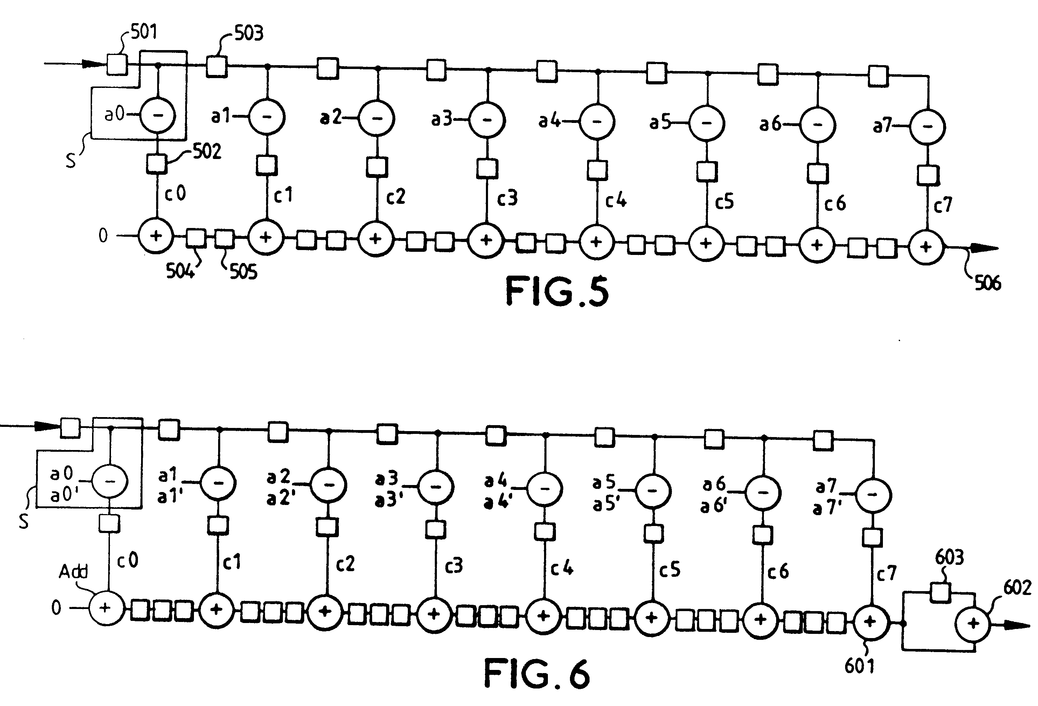

Le fonctionnement normal (non entrelacé) du réseau systolique sera expliqué à l'aide du schéma de la figure 5. Ce schéma représente un réseau systolique comprenant une seule ligne et huit colonnes. Le fonctionnement d'un réseau avec un plus grand nombre de lignes est tout à fait similaire, les résultats en sortie de chaque cellule S (sortie S) se présentant au même moment aux additionneurs. Dans le cadre du fonctionnement normal, seulement deux buffers B sont nécessaires entre chaque additionneur en bout de colonne. Pour la clarté du schéma, le troisième buffer et la cellule de dérivation ne sont pas illustrés.

Les valeurs de pixel a sont déjà mémorisées dans le réseau. Une valeur b est présentée à l'entrée du réseau à chaque cycle. Le tableau 1 représente l'évolution des sorties C sur un certain nombre de cycles.

Tableau 1

| C. | C0 | C1 | C2 | C3 | C4 | C5 | C6 | C7 |
|---|---|---|---|---|---|---|---|---|
| 0 | --- | --- | --- | --- | --- | --- | --- | --- |
| 1 | **\|b0-a0\|** | --- | --- | --- | --- | --- | --- | --- |
| 2 | \|b1-a0\| | \|b0-a1\| | --- | --- | --- | --- | --- | --- |
| 3 | \|b2-a0\| | **\|b1-a1\|** | \|b0-a2\| | --- | --- | --- | --- | --- |
| 4 | \|b3-a0\| | \|b2-a1\| | \|b1-a2\| | \|b0-a3\| | --- | --- | --- | --- |
| 5 | \|b4-a0\| | \|b3-a1\| | **\|b2-a2\|** | \|b1-a3\| | \|b0-a4\| | --- | --- | --- |
| 6 | \|b5-a0\| | \|b4-a1\| | \|b3-a2\| | \|b2-a3\| | \|b1-a4\| | \|b0-a5\| | --- | --- |
| 7 | \|b6-a0\| | \|b5-a1\| | \|b4-a2\| | **\|b3-a3\|** | \|b2-a4\| | \|b1-a5\| | \|b0-a6\| | --- |
| 8 | \|b7-a0\| | \|b6-a1\| | \|b5-a2\| | \|b4-a3\| | \|b3-a4\| | \|b2-a5\| | \|b1-a6\| | \|b0-a7\| |
| 9 | \|b8-a0\| | \|b7-a1\| | \|b6-a2\| | \|b5-a3\| | **\|b4-a4\|** | \|b3-a5\| | \|b2-a6\| | \|b1-a7\| |
| 10 | \|b9-a0\| | \|b8-a1\| | \|b7-a2\| | \|b6-a3\| | \|b5-a4\| | \|b4-a5\| | \|b3-a6\| | \|b2-a7\| |
| 11 | \|b10-a0\| | \|b9-a1\| | \|b8-a2\| | \|b7-a3\| | \|b6-a4\| | **\|b5-a5\|** | \|b4-a6\| | \|b3-a7\| |
| 12 | \|b11-a0\| | \|b10-a1\| | \|b9-a2\| | \|b8-a3\| | \|b7-a4\| | \|b6-a5\| | \|b5-a6\| | \|b4-a7\| |
| 13 | \|b12-a0\| | \|b11-a1\| | \|b10-a2\| | \|b9-a3\| | \|b8-a4\| | \|b7-a5\| | **\|b6-a6\|** | \|b5-a7\| |
| 14 | \|b13-a0\| | \|b12-a1\| | \|b11-a2\| | \|b10-a3\| | \|b9-a4\| | \|b8-a5\| | \|b7-a6\| | \|b6-a7\| |
| 15 | \|b14-a0\| | \|b13-a1\| | \|b12-a2\| | \|b11-a3\| | \|b10-a4\| | \|b9-a5\| | \|b8-a6\| | **\|b7-a7\|** |

Pendant le cycle 0, la valeur b0 est mémorisée dans le premier buffer B (référence 501) en entrée du réseau. Ce n'est qu'au cycle 1 que le résultat fourni par la première cellule S est mémorisé dans le buffer 502 en sortie C0. Pendant le cycle 1, la valeur b0 est également mémorisée par le second buffer B 503.

A un moment donné du fonctionnement du réseau, on devra retrouver à la sortie du dernier additionneur la somme de toutes valeurs absolues des différences correspondant à une position donnée du bloc courant (en l'occurrence une ligne de 8 pixels) dans la fenêtre de référence. Les résultats qui doivent s'ajouter au niveau de additionneurs pour la première ligne de la fenêtre de référence sont indiqués en gras dans le tableau. courant (en l'occurrence une ligne de 8 pixels) dans la fenêtre de référence. Les résultats qui doivent s'ajouter au niveau de additionneurs pour la première ligne de la fenêtre de référence sont indiqués en gras dans le tableau.

Cette fonction d'accumulation conditionne le retard introduit par les buffers 504 entre les additionneurs. On voit facilement que l'on doit introduire un retard de deux cycles pour que la propagation des résultats au niveau des additionneurs se fasse de manière adéquate. Ceci explique la présence de deux buffers entre chaque additionneur. Chaque buffer introduit un retard d'un cycle. Dit d'une autre façon, les deux buffers 504 et 505 entre les deux premiers additionneur annulent le retard introduit par les buffers 501 et 502.

Au bout du quinzième cycle, la valeur de la fonction Err pour la première position possible du bloc courant est présente à la sortie 506 du réseau.

On notera que lors de ce fonctionnement, seul une des deux valeurs a mémorisée dans chaque cellule S est utilisée. Selon une variante de réalisation, un seul buffer de mémorisation des valeurs de pixel du bloc courant est utilisé dans chaque cellule S.

La figure 6 et le tableau 7 illustrent le fonctionnement d'un réseau systolique en mode dit entrelacé. Ce mode permet de déterminer des fonctions d'erreur pour des blocs courants comportant un nombre de lignes égal au double du nombre de lignes du réseau systolique. Ceci est réalisé simplement en ajoutant un buffer supplémentaire dans chaque cellule S ainsi qu'un buffer supplémentaire entre chaque additionneur.

La figure 6 est similaire à la figure 5, en dehors du fait qu'un buffer supplémentaire est inséré entre chaque paire d'additionneurs. D'autre part, chaque cellule S comporte les deux buffers internes illustrés à la figure 4. Pendant les cycles pairs, le contenu du premier buffer de chaque cellule S est multiplexé vers l'unité de calcul correspondante, tandis que le contenu du second buffer est utilisé lors des cycles impairs.

Le bloc courant de taille double est séparé en deux sous-blocs a et a' superposés verticalement. Le premier sous-bloc a est stocké dans les premiers buffers de chaque cellule S, tandis que le second sous-bloc a' est stocké dans les seconds buffers de chaque cellule S.

La bande de la fenêtre de référence possède de manière identique un nombre de lignes doublé. Elle comprend une sous-bande supérieure b et une sous-bande inférieure b'. Pendant un cycle pair, une colonne de la sous-bande b est présentée à l'entrée du réseau systolique, tandis qu'une colonne de b' est présentée pendant les cycles impairs.

Le tableau 2 donne l'état des sorties c après chaque cycle. De même que précédemment, les caractères gras indiquent les résultats intermédiaires qui devront s'additionner pour former une fonction d'erreur correspondant à un sous-bloc.

L'alternance entre les deux sous-blocs et les deux sous-bandes introduit, par rapport à un fonctionnement non-entrelacé, un délai supplémentaire d'un cycle entre la présence à la sortie d'un additionneur de l'erreur cumulée correspondant à une position donnée et la présence du résultat intermédiaire correspondant à l'entrée de l'additionneur suivant. Pour cette raison, un troisième buffer est inséré entre chaque paire d'additionneurs.

Le dernier additionneur 601 du réseau de la figure 6 est relié d'une part à une première entrée d'un additionneur 602, d'autre part à un buffer 603 dont la sortie est reliée à la deuxième entrée de l'additionneur 602.

La fonction d'erreur correspondant à un sous-bloc est fournie à la sortie de l'additionneur 601 à chaque cycle (une fois le réseau correctement initialisé). Le tableau 2 montre que la valeur fonction d'erreur correspondant au sous-bloc a' est en retard d'un cycle sur celle correspondant au sous-bloc a. Il faut additionner les deux valeurs pour obtenir la valeur de la fonction d'erreur correspondant au bloc entier a+a'.

Ce fonctionnement en mode dit entrelacé est très intéressant car il permet de réduire la taille du bus de données qui achemine les bandes de pixels vers le coprocesseur.

Selon une variante de réalisation, le réseau systolique est conçu pour traiter des blocs courants possédant un nombre de lignes égal à N fois le nombre de lignes du réseau, où N est un entier supérieur à 2. Dans ce cas, on prévoira autant de buffers que nécessaire dans chaque cellule S.

Tableau 2

| C. | C0 | C1 | C2 | C3 | C4 | C5 | C6 | C7 |
|---|---|---|---|---|---|---|---|---|
| 0 | --- | --- | --- | --- | --- | --- | --- | --- |
| 1 | **\|b0-a0\|** | --- | --- | --- | --- | --- | --- | --- |
| 2 | \|b0'-a0'\| | \|b0-a1\| | --- | --- | --- | --- | --- | --- |
| 3 | \|b1-a0\| | \|b0'-a1'\| | \|b0-a2\| | --- | --- | --- | --- | --- |

Tableau 2   (suite)

| C. | C0 | C1 | C2 | C3 | C4 | C5 | C6 | C7 |
|---|---|---|---|---|---|---|---|---|
| 4 | \|b1'-a0'\| | **\|b1-a1\|** | \|b0'-a2'\| | \|b0-a3\| | --- | --- | --- | --- |
| 5 | \|b2-a0\| | \|b1'-a1'\| | \|b1-a2\| | \|b0'-a3'\| | \|b0-a4\| | --- | --- | --- |
| 6 | \|b2'-a0'\| | \|b2-a1\| | \|b1'-a2'\| | \|b1-a3\| | \|b0'-a4'\| | \|b0-a5\| | --- | --- |
| 7 | \|b3-a0\| | \|b2'-a1'\| | **\|b2-a2\|** | \|b1'-a3'\| | \|b1-a4\| | \|b0'-a5'\| | \|b0-a6\| | --- |
| 8 | \|b3'-a0'\| | \|b3-a1\| | \|b2'-a2'\| | \|b2-a3\| | \|b1'-a4'\| | \|b1-a5\| | \|b0'-a6'\| | \|b0-a7\| |
| 9 | \|b4-a0\| | \|b3'-a1'\| | \|b3-a2\| | \|b2'-a3'\| | \|b2-a4\| | \|b1'-a5'\| | \|b1-a6\| | \|b0'-a7'\| |
| 10 | \|b4'-a0'\| | \|b4-a1\| | \|b3'-a2'\| | **\|b3-a3\|** | \|b2'-a4'\| | \|b2-a5\| | \|b1'-a6'\| | \|b1-a7\| |
| 11 | \|b5-a0\| | \|b4'-a1'\| | \|b4-a2\| | \|b3'-a3'\| | \|b3-a4\| | \|b2'-a5'\| | \|b2-a6\| | \|b1'-a7'\| |
| 12 | \|b5'-a0'\| | \|b5-a1\| | \|b4'-a2'\| | \|b4-a3\| | \|b3'-a4'\| | \|b3-a5\| | \|b2'-a6'\| | \|b2-a7\| |
| 13 | \|b6-a0\| | \|b5'-a1'\| | \|b5-a2\| | \|b4'-a3'\| | **\|b4-a4\|** | \|b3'-a5'\| | \|b3-a6\| | \|b2'-a7'\| |
| 14 | \|b6'-a0'\| | \|b6-a1\| | \|b5'-a2'\| | \|b5-a3\| | \|b4'-a4'\| | \|b4-a5\| | \|b3'-a6'\| | \|b3-a7\| |
| 15 | \|b7-a0\| | \|b6'-a1'\| | \|b6-a2\| | \|b5'-a3'\| | \|b5-a4\| | \|b4'-a5'\| | \|b4-a6\| | \|b3'-a7'\| |
| 16 | \|b7'-a0'\| | \|b7-a1\| | \|b6'-a2'\| | \|b6-a3\| | \|b5'-a4'\| | **\|b5-a5\|** | \|b4'-a6'\| | \|b4-a7\| |

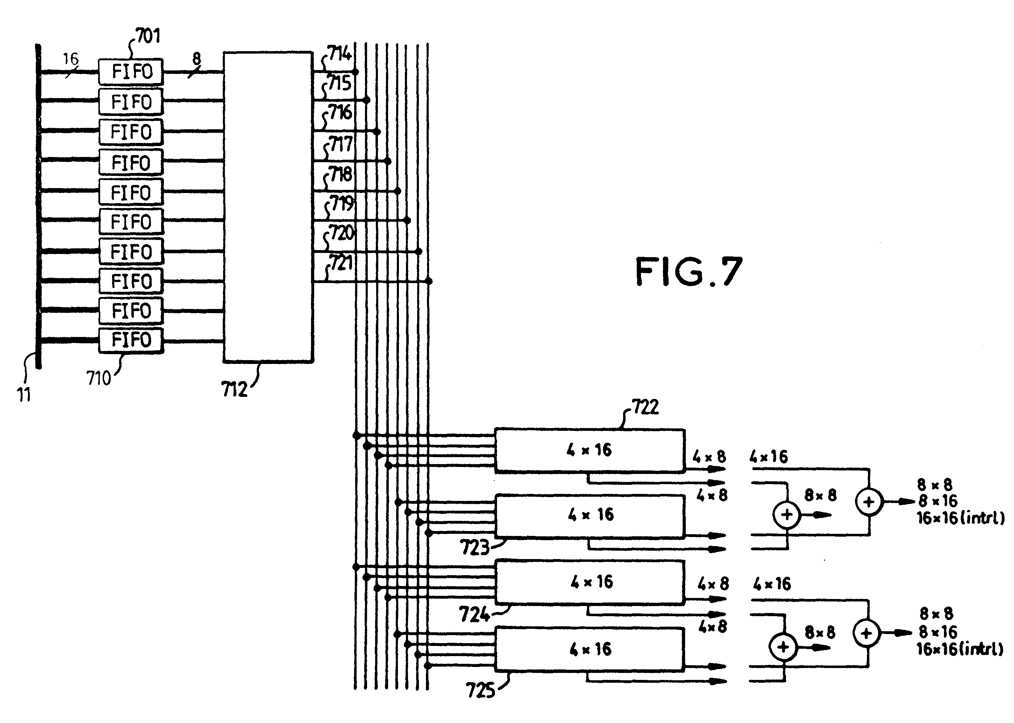

La figure 7 représente schématiquement le coprocesseur suivant une première variante de l'exemple de réalisation. Selon cette variante, le coprocesseur comprend dix piles premier entré premier sorti (piles FIFO) 701 à 710, reliées en parallèle sur le bus de données 11. Le nombre de mots de données par FIFO détermine le nombre de colonnes de pixels de la fenêtre de recherche. Les sorties des piles 701 à 710 sont reliées à un circuit de commutation 712 possédant dix entrées et huit sorties 714 à 721.

Le circuit 712 permet de connecter la sortie de n'importe laquelle des dix FIFOs sur n'importe laquelle des huit sorties du circuit. Chaque FIFO contient une ligne entière de la fenêtre de recherche. Les huit FIFOs connectées à une sortie à un moment donné correspondent aux lignes de la bande de la fenêtre de recherche traitée.

Les deux FIFOs supplémentaires non connectées sont chargées par l'intermédiaire du bus de données à partir des données stockées dans la mémoire 10. Les données chargées correspondent aux lignes de la fenêtre de recherche qui diffèrent par rapport aux bandes en cours de traitement.

Supposons par exemple que la première bande de huit lignes L1 à L8 d'une fenêtre de recherche est contenue dans les FIFOs 701 à 708. Pendant le traitement de ces huit lignes, la ligne L9 est chargée dans la FIFO 709. Lorsque le traitement de la première bande est terminé, la ligne L1 stockée dans la FIFO 701 devient inutile. La seconde bande contient en effet les lignes L2 à L9. Le traitement de cette seconde bande peut donc commencer sans temps mort, puisque la bande complète est présente dans les FIFOs. Le circuit de commutation 802 de type "crossbar" aura pour charge de rétablir le bon ordre des lignes mémorisées avant présentation aux réseaux systoliques 722 à 725.

Dans le cas où les bandes ont huit lignes, neuf FIFOs sont suffisantes pour le fonctionnement décrit. La dixième FIFO est utilisée par exemple lorsqu'on traite deux bandes de quatre lignes en parallèle.

Selon la présente variante, quatre réseaux systoliques 722 à 725 de quatre lignes et de seize colonnes chacun sont connectés aux sorties du circuit de commutation. Par convention, on dira que la sortie 714 représente la ligne supérieure d'une bande de huit lignes, tandis que la sortie 721 représente la ligne inférieure. Les premier et troisième réseaux (respectivement 722 et 724) sont connectés aux quatre sorties supérieures 714 à 717, tandis que les second et quatrième réseaux (respectivement 723 et 725) sont connectés aux quatre sorties inférieures 718 à 721.

La disposition ci-dessus permet de traiter de façon flexible des blocs courants de tailles différentes. On peut en effet considérer les quatre réseaux de différentes manières:

Huit réseaux de 4*8 éléments, chaque réseau de 4*16 éléments traitant deux blocs courants de 4*8 éléments;
Quatre réseaux de 8*8 éléments;
Deux réseaux de 8*16 éléments;
Deux réseaux de 16*16 éléments.

Dans ce dernier cas, les réseaux travaillent en mode entrelacé, seulement huit sorties étant disponibles et non seize. Les huit sorties fourniront alternativement des colonnes de huit pixels d'une bande supérieure et d'une bande inférieure de la fenêtre de référence.

Il est bien sûr envisageable d'utiliser seize FIFOs au lieu de huit (sans compter les FIFOs nécessaires au chargement de la ligne suivante).

Comme il a été dit précédemment, la profondeur des FIFOs détermine la largeur de la fenêtre de référence. Dans le cas où l'on travaille avec des réseaux de 4*8 éléments, il est possible de grouper les FIFOs par deux et de stocker dans chaque paire de FIFOs l'équivalent d'une ligne de pixels de longueur double.

La figure 7 indique d'autre part sous la forme de flèches la façon de grouper les résultats de calcul à la sortie de chaque réseau de 4*16 éléments suivant le mode de fonctionnement.

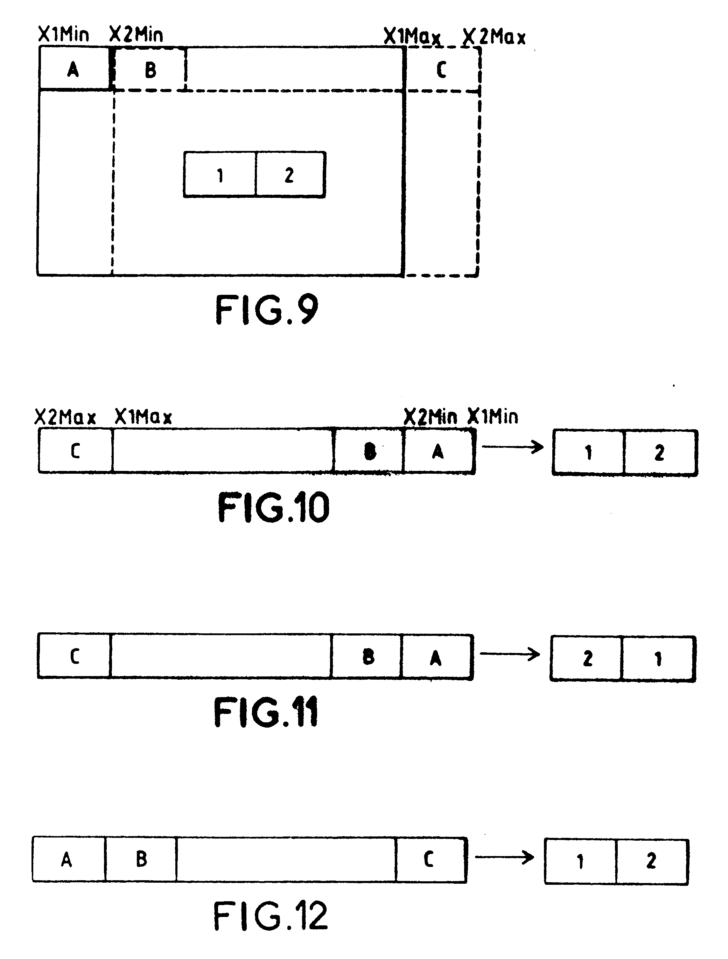

La figure 8 illustre une seconde variante. Neuf FIFOs (regroupés sous la référence 801) alimentent un circuit de commutation 802. Le coprocesseur suivant le présent exemple comporte huit réseaux systoliques 803 à 810 de 4*8 éléments. En fait, deux réseaux 4*8 en cascade de la figure 8 équivalent à un réseau 4*16 de la figure 7. La figure 8 permet de mieux illustrer le cheminement des résultats de calcul de chacun des réseaux lorsque huit blocs courants de 4*8 sont traités en parallèle. Exemple sera pris sur les deux réseaux supérieurs 803 et 804. Le résultat final (c'est à dire la valeur de la fonction d'erreur) à la sortie du réseau 803 est transmis directement au réseau 804. Suivant que l'on travaille avec huit blocs courants de 4*8 ou quatre blocs courants de 8*8, ce résultat à la sortie du réseau 803 doit ou non être disponible pour un traitement ultérieur. Dans le cas où l'on travaille avec 8 blocs courants de 4*8 pixels, ce résultat sera nécessaire pour la détermination du vecteur mouvement du bloc courant traité par le réseau 803.

Selon la présente variante, une cellule M est associée à chaque réseau de 4*8 éléments. Chaque cellule M détermine la valeur minimale de la fonction d'erreur en sortie d'un des réseaux parmi toutes les valeurs d'erreur associées à un bloc et garde en mémoire les coordonnées du vecteur mouvement correspondant. Les résultats sont communiqués à travers un bus de données spécifique 811.

Les sorties des réseaux 803 et 804, 807 et 808 sont connectés chacun à l'entrée d'un multiplexeur à deux entrées, dont la sortie est connectée à l'entrée de la cellule M associée. La sortie de chacun des mêmes réseaux est aussi connectée à l'entrée d'un additionneur à deux entrées qui reçoit sur son autre entrée la sortie du réseau immédiatement inférieur. Pour les réseaux 803, 804, 807 et 808, il s'agit respectivement des sorties des réseaux 805, 806, 809 et 810.

Lorsque le processeur travaille sur huit blocs courants de 4*8 pixels chacun, la sortie de chaque réseau est directement reliée à la cellule M associée. Chaque cellule M détermine alors de façon autonome la valeur minimale de la fonction d'erreur et le vecteur mouvement. Il en résulte huit vecteurs distincts. Les valeurs de la fonction d'erreur en sortie des réseaux 803, 805, 807 et 809 ne sont pas transmis aux réseaux qui les suivent en série.

Lorsque le processeur travaille sur quatre blocs de 8*8 pixels, les multiplexeurs commutent pour que l'une des cellules M associées avec deux réseaux superposés travaillant sur le même bloc reçoive la somme des valeurs des fonctions d'erreur calculées par ces deux réseaux. Par exemple, la cellule M associée au réseau 803 fera ses calculs à partir des valeurs de la fonction d'erreur correspondant au bloc 8*8 traité dans les réseaux 803 et 805. Un seul vecteur en résultera. Comme dans le cas du paragraphe précédent, les valeurs de la fonction d'erreur issus de la première colonne de réseaux ne sont pas transmis à la seconde colonne.

Lorsque le processeur travaille sur deux blocs de 8*16 pixels, seulement les cellules M associées aux réseaux 804 et 808 sont utilisées. Les paires de réseaux 4*8 803 et 804, 805 et 806, 807 et 808 et finalement 809 et 810 sont considérées comme ne formant chacune qu'un réseau continu de dimensions 4*16. Par exemple, l'additionneur associé au réseau 804 additionne les erreurs issus des réseaux 804 et 806. Les valeurs de la fonction d'erreur calculées par les réseaux 803 et 805 sont incluses dans les valeurs de la fonction d'erreur calculées par les réseaux 804 et 806 et transmises à ces dernières par l'intermédiaire des connexions entre les réseaux 803 et 804 respectivement 805 et 806.

Dans le cas du mode entrelacé, le principe est identique. Simplement, la ou les cellules M maintiennent deux vecteurs mouvement, un pour chaque bloc.

La commutation des multiplexeurs est commandée par le contrôleur 2 de la figure 1, en fonction du mode de fonctionnement choisi.

La figure 9 illustre la disposition de deux fenêtres de référence lorsque deux blocs courants doivent être traités. Ces blocs courants portent les références 1 et 2. Les références X1Min et X1Max définissent les abscisses de la fenêtre de référence correspondant au bloc 1, tandis que X2Min et X2Max définissent les abscisses de la fenêtre correspondant au bloc 2. La position des blocs 1 et 2 correspond selon le présent exemple sensiblement au milieu des fenêtres. On peut voir que les deux fenêtres ont en commun toute la partie située entre les abscisses X2Min et X1Max.

Le co-processeur systolique permet un traitement qui n'exige qu'un passage des pixels situés entre les abscisses X1Min et X2Max pour les calculs liés aux deux blocs 1 et 2.

Comme décrit plus haut, deux réseaux systoliques en série (tels que par exemple les deux réseaux 803 et 804) peuvent traiter deux blocs séparés. Tandis que les données pixel passent de façon transparente d'un réseau au suivant, les valeurs de fonction d'erreur élaborées par le premier réseau ne sont simplement pas transmises au réseau suivant. Les deux cellules M associées respectivement au premier et au second réseau récupèrent séparément les valeurs des fonctions d'erreur correspondant à chacun des deux réseaux.

La figure 10 illustre un premier exemple de disposition et d'introduction des données pixel dans les deux réseaux systoliques en série. On prendra comme illustration la bande supérieure de pixels située entre les abscisses X1Min et X2Max. Les références A et B désignent les positions des premiers blocs dans les deux fenêtres de référence à être comparés aux blocs courants et permettent de mieux voir la façon dont les données sont introduites dans le réseau.

Il apparait naturel de faire traiter le bloc 1 par le premier réseau systolique (par exemple le réseau 803) et le bloc 2 par le second réseau (par exemple 804). En effet, cette disposition correspond à la disposition naturelle des blocs 1 et 2 dans l'image courante. De plus, lorsque les deux réseaux travaillent en série (selon un autre mode de fonctionnement) sur un bloc de taille double par rapport à la taille d'un des blocs 1 ou 2, cette disposition serait tout aussi naturelle.

Or, il apparait que cette disposition présente des désavantages par rapport au procédé inventif décrit ci-dessous et illustré par la figure 11.

On peut voir sur le tableau 1 que pour des réseaux de 8 pixels de longueur, le calcul effectué pour la dernière colonne du premier bloc de référence n'est effectué qu'au cycle 15.

Si l'on considère la disposition de la figure 10, les calculs relatifs au bloc A et au bloc 1 seront finis après le cycle 15. Ceux correspondant au bloc 2 et B ne débuteront qu'au cycle 17 lorsque tout le bloc B aura traversé le premier réseau.

On voit donc que le premier résultat valide (correspondant au bloc A) issu du premier réseau ne sera pas disponible en même temps que le premier résultat valide (correspondant au bloc B) issu du second réseau.

Ceci exige une gestion décalée des résultats de chacun des deux réseaux, ce qui rend le système plus complexe.

De plus, la bande doit passer dans le réseau jusqu'à ce que le bloc C de la figure 10 se trouve entièrement dans le second réseau. Ceci veut dire que 2*(X2Max-X1Min+X2Min-X1Min) cycles seront nécessaires pour traiter la bande entière. Le premier réseau effectuera des calculs inutiles pendant que le bloc C pénétrera dans le second réseau et inversement, le second réseau effectuera des calculs inutiles en attendant que la première colonne de pixels du bloc B lui parvienne à travers le premier réseau. Selon une variante de réalisation, cet inconvénient est minimisé en traitant toutes les bandes d'une image de façon continue, en insérant une bande après l'autre dans le réseau systolique sans laisser d'interstices.

La figure 11 illustre un exemple particulier du procédé conforme à l'invention. Les deux blocs 1 et 2 sont mémorisés de façon à ce que leur disposition soit l'inverse de leur disposition dans l'image courante. En l'occurrence, le bloc 2 est mémorisé dans le premier réseau, tandis que le bloc 1 est mémorisé dans le réseau suivant.

Ainsi, le bloc A sera traité par le second réseau en même temps que le bloc B sera traité par le premier réseau et les résultats pour une même bande seront disponibles en parallèle et en même temps pour les deux blocs. Tant que la première colonne de pixels du bloc A ne parvient au second réseau, les calculs effectués par les deux réseaux sont inutiles (du moins si le calcul d'une bande précédente n'est pas en train de se finir). Cependant, il ne sera pas nécessaire d'attendre que le bloc C traverse entièrement le premier réseau, puisqu'il sera traité uniquement par ce premier réseau. On gagne donc le temps de traitement correspondant à un bloc entier (16 cycles), soit par bande traitée, soit par image traitée si l'on considère une introduction continue de bandes.

Selon une variante de réalisation de l'invention, on tient compte des résultats fournis par le premier réseau même en ce qui concerne les pixels correspondant au bloc A. Ceci introduit une dissymétrie de la fenêtre de référence autour de la position du bloc 2. Dans la mesure où cette dissymétrie n'est pas gênante (les vecteur mouvement déterminés ainsi pourront ne pas avoir des composantes maximales négatives et positives de même amplitude), cette variante élargit le champ de référence sans augmenter le temps de calcul global. Cette variante peut être appliquée aussi bien au début d'une bande qu'à sa fin. On perd néanmoins dans ce cas l'avantage de la disponibilité en même temps des résultats pour les deux blocs.

Il est à noter que l'inversion des blocs 1 et 2 par rapport à la disposition de la figure 10 revient au même que de garder la disposition de cette figure 10 et d'introduire la bande de pixels en inversant son sens, à savoir en commençant par les pixels d'abscisse X2Max et en terminant par ceux d'abscisse X1Min. Dans ce cas, les pixels dans chacun des blocs courants 1 et 2 sont inversés. Ce mode de réalisation est illustré par la figure 12.

L'invention ne se limite pas à l'exemple du réseau systolique décrit, mais s'applique également et à d'autres types de réseaux utilisés notamment pour l'estimation de mouvement.

D'autre part, plus de deux réseaux peuvent être mis en série.

**Revendications**

1. Procédé de traitement des données dans des réseaux matriciels (803, 804) dans un système d'estimation de mouvement, caractérisé en ce que chaque réseau (803, 804) effectuant un calcul de distortion (Err) pour un bloc de pixels (1, 2) d'une image courante, au moins deux réseaux (803, 804) étant disposés en série effectuant les calculs pour au moins deux blocs adjacents (1, 2) de ladite image courante, la fenêtre de référence correspondant à l'ensemble de ces blocs étant introduite par bandes de pixels dans le premier desdits réseaux (803) et se propageant de réseau en réseau dans ladite série de réseaux, l'attribution des blocs (1, 2) aux réseaux et le sens d'introduction de la bande dans les réseaux étant tels que la dernière partie (C, respectivement A) de la bande introduite dans le réseau corresponde à une partie de la fenêtre du bloc (2, respectivement 1) attribué au premier des réseaux (803).

2. Procédé selon la revendication 1, caractérisé en ce que les fenêtres de référence sont centrées autour des positions des blocs courants, les fenêtres de deux blocs adjacents étant ainsi décalées d'un bloc.

3. Procédé selon la revendication 2, caractérisé en ce que les diverses fenêtres ayant des dimensions identiques, l'attribution des blocs (1, 2) aux réseaux et le sens d'introduction de la bande dans les réseaux sont tels que les premiers résultats des calculs de distortion effectués par les différents réseaux soient disponibles en même temps.

4. Procédé selon l'une des revendications 2 à 3, caractérisé en ce qu'un premier bloc (1) et un second bloc (2) adjacents horizontalement sont traités respectivement par un premier réseau (803) et un second réseau (804) disposés en série dans cet ordre, l'introduction de la bande de pixels commençant par le premier réseau dans un sens tel que la partie de la bande correspondant à la fenêtre associée au second bloc (2) soit introduite en premier.

5. Procédé selon l'une des revendications précédentes, caractérisé en ce que lorsque la fin d'une bande de pixels correspond à des parties de fenêtres de référence ne devant normalement pas être pris en compte par un réseau particulier traitant un bloc donné, on tient néanmoins compte des résultats de calcul obtenus à partir des données correspondant auxdites parties de fenêtres pour élargir la fenêtre de référence normalement associée au bloc traité par ledit réseau particulier.


**Patentansprüche**

1. Verfahren zur Datenverarbeitung in matrixförmigen Netzwerken (803, 804) in einem Bewegungsschätzungssystem,
dadurch gekennzeichnet, daß jedes Netzwerk (803, 804) eine Berechnung der Verzerrung (Err) für einen Pixelblock (1, 2) in einem laufenden Bild durchführt, daß wenigstens zwei Netzwerke (803, 804) in Reihe liegen und die Berechnungen für wenigstens zwei aneinanderliegende Blöcke (1, 2) des laufenden Bildes durchführen, daß das Referenzfenster der Gesamtheit dieser Blöcke entspricht, die in Pixelbändern in das erste der Netzwerke (803) eingegeben werden und sich von Netzwerk zu Netzwerk in der Reihe von Netzwerken ausbreiten, daß die Zuordnung der Blöcke (1, 2) zu den Netzwerken und die Eingaberichtung des Bandes in die Netwerke derart ist, daß der letze Teil (C, bzw. A) des in das Netzwerk eingegebenen Bandes einem Teil des Fensters des Block (2 bzw. 1) entspricht, der dem ersten der Netzwerke zugeordnet ist.

2. Verfahren nach Anspruch 1, dadurch gekennzeichnet, daß die Referenzfenster um Lagen von laufenden Blöcken zentriert sind und die Fenster der beiden aneinanderliegenden Blöcke dadurch um einen Block verschoben sind.

3. Verfahren nach Anspruch 2, dadurch gekennzeichnet, daß die verschiedenen Fenster identische Abmessungen aufweisen, daß die Zuordnung der Blöcke (1, 2) zu den Netzwerken und die Eingaberichtung des Bandes in die Netzwerke derart ausgebildet ist, daß die ersten Berechnungsergebnisse für die Verzerrung, die durch die verschiedenen Netzwerke erfolgen, zur gleichen Zeit verfügbar sind.

4. Verfahren nach einem der Ansprüche 2 bis 3, dadurch gekennzeichnet, daß ein erster Block (1) und ein zweiter Block (2), die horizontal aneinander liegen, durch ein erstes Netzwerk (803) bzw. ein zweites Netzwerk (804), die in dieser Reihenfolge in Reihe liegen, verarbeitet werden, daß die Eingabe des Pixelbandes durch das erste Netzwerk in einer solchen Richtung beginnt, daß der Teil des Bandes, der dem dem zweiten Block (2) zugeordneten Fenster entspricht, als erstes eingegeben wird.

5. Verfahren nach einem der vorangehenden Ansprüche, dadurch gekennzeichnet, daß dann, wenn das Ende eines Pixelbandes Teilen der Referenzfenster entspricht, die normalerweise durch ein einen gegebenen Block verarbeitendes besonderes Netzwerk nicht berücksichtigt werden müssen, dennoch die Berechnungsergebnisse aus den diesen Teilen der Fenster entsprechenden Daten berücksichtigt werden, um das Referenzfenster zu vergrößern, das normalerweise dem durch das besondere Netzwerk verarbeiteten Block zugeordnet ist.

**Claims**

1. Method of processing data in matrix arrays (803, 804) in a motion estimation system, characterized in that each array (803, 804) performing a calculation of distortion (Err) for a block of pixels (1, 2) of a current image, at least two arrays (803, 804) being arranged in series performing the calculations for at least two adjacent blocks (1, 2) of the said current image, the reference window corresponding to the entirety of these blocks being introduced in bands of pixels into the first of the said arrays (803) and propagating from array to array in the said series of arrays, the allocation of the blocks (1, 2) to the arrays and the direction of introduction of the band into the arrays being such that the last part (C, respectively A) of the band introduced into the array corresponds to a part of the window of the block (2, respectively 1) allocated to the first of the arrays (803).

2. Method according to Claim 1, characterized in that the reference windows are centred about the positions of the current blocks, the windows of two adjacent blocks thus being offset by one block.

3. Method according to Claim 2, characterized in that the various windows having identical dimensions, the allocation of the blocks (1, 2) to the arrays and the direction of introduction of the band into the arrays are such that the first results of the distortion calculations performed by the various arrays are available at the same time.

4. Method according to one of Claims 2 to 3, characterized in that a first block (1) and a second block (2) which are horizontally adjacent are processed respectively by a first array (803) and a second array (804) arranged in series in this order, the introduction of the band of pixels commencing with the first array in a direction such that the part of the band corresponding to the window associated with the second block (2) is introduced first.

5. Method according to one of the preceding claims, characterized in that when the end of a band of pixels corresponds to reference window parts not normally requiring to be taken into account by a particular array processing a given block, the calculation results obtained from the data corresponding to the said window parts are nevertheless taken into account so as to widen the reference window normally associated with the block processed by the said particular array.

FIG.1

DRAM — 110

UGM — 112

101

111

bus

ENTRÉE

104

105

106

COPROCESSEUR

103

MV BUFF

114

MAX-AVR

113

SORTIE

107

RISC CONTRÔLEUR

102

INTERFACE MICROPROCESSEUR

115

RAM

108

ROM

109

EP 0 778 544 B1

FIG.3

FIG.2a

BLOC COURANT

BANDE

FENÊTRE
DE RÉFÉRENCE

IMAGE

FIG.2b

FIG.4

FIG. 8

**FIG.5**

**FIG.6**

EP 0 778 544 B1

FIG.7

EP 0 778 544 B1

X1Min   X2Min                                                X1Max   X2Max

| A | B |  |  |  |  | C |

| 1 | 2 |

## FIG.9

X2Max   X1Max                                    X2Min  X1Min

| C |  |  | B | A | → | 1 | 2 |

## FIG.10

| C |  |  | B | A | → | 2 | 1 |

## FIG.11

| A | B |  |  | C | → | 1 | 2 |

## FIG.12